# EUROPÄISCHE PATENTSCHRIFT

(11) **EP 2 126 369 B1**
(45) Veröffentlichungstag und Bekanntmachung des Hinweises auf die Patenterteilung: **30.11.2016**
(21) Anmeldenummer: 08707078.5
(22) Anmeldetag: 17.01.2008
(51) Int. Cl.: F15B 1/10, F16J 3/02

(54) **STRUKTURBAUTEIL**
STRUCTURAL COMPONENT
COMPOSANT STRUCTUREL

(30) Priorität: 25.01.2007 DE 102007003723
(43) Veröffentlichungstag der Anmeldung: 02.12.2009
(73) Patentinhaber: ElringKlinger AG, 72581 Dettingen (DE)
(72) Erfinder: BOCK, Stefan, 63762 Grossostheim (DE)
(74) Vertreter: Hoeger, Stellrecht & Partner Patentanwälte mbB
(86) Internationale Anmeldenummer: PCT/EP2008/000312
(87) Internationale Veröffentlichungsnummer: WO 2008/089908

(56) Entgegenhaltungen:
- EP-A- 0 010 943
- EP-A- 0 604 953
- EP-A- 1 156 217
- WO-A-98/55781
- WO-A-98/55782
- US-A- 5 133 387

## Beschreibung

Die Erfindung betrifft ein Strukturbauteil in Form eines sich in zwei verschiedenen Hauptrichtungen erstreckenden, mindestens einlagigen und elastisch nachgiebigen Trennelementes, das mindestens zwei linienförmige Strukturteile aufweist, die in den beiden Hauptrichtungen gegeneinander versetzt angeordnet sind, wobei zumindest ein Teil der linienförmigen Strukturteile einen schlingenförmigen Querschnitt aufweist, und wobei das Trennelement zumindest teilweise aus einem Fluor-Kunststoffmaterial aufweisenden Werkstoff, vorzugsweise einem zur Gänze aus Fluor-Kunststoffmaterial bestehenden Werkstoff, gebildet ist.

Ein derartiges Strukturbauteil ist beispielsweise aus WO 98/55782 A bekannt geworden, welche eine Membran mit Mehrwergkompensation der Stauchung zum besseren Funktionsablauf betrifft. Die Membran ist mit einem Profil versehen, welche insbesondere in einem mittigen Bereich weder in Radial- noch in Umfangsrichtung ausgerichtet ist. Die Membran kompensiert auch wie bisher die Stauchung, jedoch zusätzlich die im Winkel dazu auftretende Stauchung. Dabei verlaufen z.B. Rillen aus der Richtung vom Membranrand spiralförmig in einem Bogen in die annähernde Richtung zum Membranmittelpunkt. Beim Betätigen der Membran wirken die seitlich und die quer zueinander verlaufenden Stauchungskräfte jeweils gleichzeitig schräg auf das Profil, das dadurch aus unterschiedlichen Richtungen zusammengedrückt wird und beide Stauchungen kompensiert. Die Membran ist aus einem wenig elastischen Material, wie Polytetrafluorethylen (PTFE), gefertigt und ist in ihrer Ruhestellung plan angeordnet. Die eingeprägte Struktur umfasst Rillen, die linien- oder bogenförmig von einen äußeren Punkt am äußeren Rand zu einem inneren Punkt im Zentrum verlaufen, wobei äußerer und innerer Punkt in Umfangsrichtung um einen Winkel gegeneinander versetzt sind. Durch die geänderte Ausrichtung der konzentrischen Rillen werden keine zusätzlichen Rillen zur Erreichung der Kompensation in zusätzlicher Richtung benötigt.

WO 98/55781 A betrifft eine weitere Membran mit einer Mehrweg-Kompensation der Stauchung. Die Membran besteht aus einem steifen, wenig dehnbaren Material und weist einen äußeren einspannbaren Rand und ein quer zum Rand bewegbares Zentrum sowie ein Profil auf, das in die Oberfläche der Membran eingebracht ist und wellen-, falten- oder rillenförmige Strukturen aufweist. Dadurch, dass die Struktur in dem zwischen dem Rand und dem Zentrum liegenden Bereich in einem Winkel sowohl zu der Umfangsrichtung als auch zu der Radialrichtung der Membran verläuft, und dass die Membran einen dreidimensionalen Hohlraum begrenzt, wirken beim Betätigen der Membran die seitlich und die quer zueinander verlaufenden Stauchungskräfte jeweils gleichzeitig schräg auf das Profil ein, das dadurch aus unterschiedlichen Richtungen zusammengedrückt wird und beide Stauchungen kompensiert. Hierbei lässt die volumetrische Hohlraumanordnung insbesondere die Verwendung der Membran für Hydrospeicher als geeignet erscheinen. Auch in der Anordnung nach WO 98/55781 A werden keine zusätzlichen Rillen zur Kompensation in beiden Richtungen benötigt.

Die EP 0 604 953 A1 offenbart einen Druckbehälter nebst einer gewellten Membran. Die gewellte Membran weist einen kreisförmigen, flach ausgebildeten zentralen Bereich und einen diesen umgebenden, aus einer Aneinanderordnung von konzentrischen, konvexen und konkaven Teilbereichen zusammengesetzten äußeren Bereich auf. Die derart gewählte Membran ist in einen Behälter aufgenommen, welcher an die Wellenstruktur der Membran angepasste Bauteile aufweist. Die den inneren Raum des Behälters in einen Fluid- und einen Gasraum unterteilende Membran ist aus PTFE gebildet und wird entsprechend der Druckbeaufschlagung der beiden Teilräume nach oben bzw. unten bewegt. Bei der Verformung der Membran bleibt die Wellenstruktur erhalten, d. h. es findet keine Verbiegung eines konkaven in einen konvexen Bereich und umgekehrt statt. In den beiden Extremlagen liegt die Membran am oberen bzw. unteren Bauteil des Behälters nahezu flächig an.

US 5,133,387 offenbart einen Fluidpulsationsdämpfer mit einem spiralförmig gefalteten Faltenbalg. Der Faltenbalg weist eine einerseits offene und andererseits geschlossene Form auf und ist aus relativ dünnen ringförmigen Wänden, welche unter Ausbildung einer spiralförmig umlaufenden Rille angeordnet sind, gebildet. Der Faltenbalg kann zudem aus zwei an- bzw. ineinandergesetzten Schichten bestehen, wobei eine äußere Schicht aus einem Metall oder Kunststoff und eine innere Schicht bzw. Schutzschicht aus einem Kunststoff, wie Perfluoralkoxy-Copolimerisat oder Polyvinylidenfluorid, besteht.

Eine weitere Fluideinrichtung mit einem Faltenbalg ist aus EP 1 156 217 A1 bekannt geworden. Der in einer axialen Richtung dehn- und stauchbare Faltenbalg ist in einem Pumpenkörper angeordnet und bildet eine Flüssigkeitskammer aus. Die beim Dehnen bzw. Stauchen des Faltenbalgs gebildeten, wulstartigen Falten sind derart ausgebildet und angeordnet, dass die jeweiligen innenliegenden Faltflächen von außen nach innen verlaufend zur axialen Ausrichtung des Faltenbalgs nach unten geneigt sind. Auf diese Weise fließt sowohl in der gedehnten bzw. gestreckten und der gestauchten bzw. verkürzten Stellung des Faltenbalgs Flüssigkeit mit einem Sediment, wie Schlamm, von den geneigten Faltflächen ab, ohne sich dort zu sammeln. Der Faltenbalg besteht aus einem Material mit einer guten Hitze- und Chemikalienbeständigkeit, wie PTFE oder PFA.

Ein weiteres Strukturbauteil, ausgebildet als elastisch nachgiebiges Trennelement, ist in der DE 28 52 912 A1 beschrieben. Das bekannte kalottenartige Strukturbauteil ist aus einem gummiartigen Werkstoff (Natur- oder Synthesekautschuk, wie Acrylnitril-Butadien-Kautschuk) aufgebaut und dazu vorgesehen in einem Druckbehälter oder Hydrospeicher eine durch Verformen bewegbare Trennmembran zu bilden, die eine Gasseite von einer Flüssigkeitsseite trennt. An das Betriebsverhalten derartiger Membranen sind zwei Hauptanforderungen zu stellen. Zum einen muß Impermeabilität gewährleistet sein, um Gasdiffusion zu vermeiden und um somit die Funktionssicherheit des Behälters bzw. Speichers sicherstellen zu können, und zum anderen sind entsprechende mechanische Eigenschaften erforderlich, insbesondere leichte Verformbarkeit und hohe Biegewechselfestigkeit, die auch unter dem Einfluß aggressiver Medien erhalten bleiben soll, um dergestalt das Arbeitsvermögen der Speichereinrichtung sicherstellen zu können.

Das erwähnte bekannte Trennelement wird diesen Forderungen nicht gerecht. Die bei der bekannten Lösung vorgesehene Aufeinanderfolge von an dem Trennelement angeordneten linienförmigen Strukturteilen in Form von einstückig mit dem Trennelement verbundenen Erhöhungen, die in den beiden aufeinander senkrecht stehenden Hauptrichtungen, also in einer axialen und dazu senkrecht stehenden radialen Hauptrichtung, gegeneinander versetzt angeordnet sind, tragen zwar zur Verbesserung der Undurchlässigkeit der Membran bei, weil die genannten Erhöhungen die durchschnittliche Wanddicke vergrößern; dies führt jedoch zu einer Verschlechterung der Beweglichkeit des Trennelementes. Letzteres auch deshalb, weil die massiv ausgebildeten Erhöhungen in Reihenfolge unmittelbar aneinander anschließen und halbkreisförmige Querschnittsflächen ausbilden, die insoweit die sonstige Wandstärke der Membran deutlich erhöhen und Widerlagerstellen bilden, die die freie Bewegung der Membran als Trennelement einschränken. Auch kommt es aufgrund starker mechanischer Beanspruchungen bei der gummielastischen Trennmembranlösung, insbesondere bei deren Walkbewegungen, zumindest im langfristigen Einsatz, zu einem Einreißen des Membranmaterials und mithin zu einem Versagen des zuordenbaren Hydrospeichers.

Um dem zu begegnen, ist bereits vorgeschlagen worden (DE 100 03 648 A1), anstelle einer gummielastisch nachgiebigen Trennmembran als Strukturbauteil für einen hydropneumatischen Druckspeicher einen Metallbalg einzusetzen, der grundsätzlich als sog. Faltenbalg ausgebildet ist. Die einzelnen Falten des Balges bilden dabei die schlingenförmigen Strukturteile des Strukturbauteils aus, die nur in axialer Richtung des Balg-Strukturbauteils in gleichmäßigen Abständen voneinander angeordnet dergestalt versetzt zueinander sind und im übrigen in der anderen radialen Hauptrichtung denselben radialen Abstand zu der genannten gemeinsamen Längsachse als erster Hauptrichtung aufweisen. Sofern eine Ausgestaltung als Metallfaltenbalg, insbesondere in Edelstahlausführung, erfolgt, ist sichergestellt, dass zumindest gegen gewisse anzusteuernde und zu trennende aggressive Medien der Faltenbalg resistent ist, so dass dergestalt ein Versagen auch im lang andauernden Betrieb ausgeschlossen werden kann. Insbesondere auch deshalb, weil sich beim Betrieb des Balges die Faltenteile stützend aneinanderlegen können und insoweit schädigende Überbeanspruchungen weitgehend ausgeschlossen sind. Die genannten Faltenbälge weisen insbesondere ein günstiges Verhältnis Hub zu freier axialer Baulänge auf, so dass insoweit auch bei kurzer Baulänge ein hohes Arbeitsvermögen für die Speicheranordnung erreichbar ist; allein sind die genannten Balglösungen, insbesondere in Edelstahlausführung, um aggressiven Medien zu begegnen, sehr teuer in der Herstellung und aufgrund der doch recht kurzen Arbeits- und Hublänge nicht für jeden Einsatzfall bei Hydrospeichern verwendbar.

Die bekannten Strukturbauteile finden überwiegend Anwendung in Hydrospeicherlösungen; grundsätzlich sind sie aber für jedwede Art an Medientrennung geeignet; so zeigt beispielsweise die US 6,549,110 B1 die Anwendung einer gummielastischen Trennmembran als Strukturbauteil in Form einer sog. Rollmembran für den Abschluss eines Transformator-Ausgleichsbehälters, beispielsweise bei Schienenfahrzeugen, wobei die Rollmembran in Abhängigkeit der Druckverhältnisse oder der Befüllungssituation des Transformator-Ausgleichsbehälters dem jeweiligen Füllstand im Behälter nachfolgen kann. Grundsätzlich sind also solche Strukturbauteile auch als Abschlussteil für insbesondere unter Druck stehende Medienbehältnisse jedweder Art einsetzbar.

Ausgehend von diesem Stand der Technik liegt der Erfindung die Aufgabe zugrunde, die bekannten Strukturbauteile dahingehend weiter zu verbessern, dass sie funktionssicher, langlebig in der Anwendung sowie kostengünstig in der Herstellung und Montage sind.

Diese Aufgabe löst ein Strukturbauteil mit den Merkmalen des Patentanspruchs 1.

Es wird ein Strukturbauteil erhalten, das sich nicht nur durch hervorragende Diffusionsdichtigkeit auszeichnet, sondern auch durch besonders gute mechanische Eigenschaften, wie extreme Biegewechselfestigkeit, hervorsticht. Die angesprochene Schlingenform für das jeweils zuordenbare Strukturteil ermöglicht sehr geringe Wanddicken für das elastisch nachgiebige Trennelement, woraus die gewünschte leichte Verformbarkeit resultiert und dennoch ist in hohem Maße die Funktionssicherheit gewährleistet. Die eingesetzten Schlingen liegen als offene Schlingen vor, d.h. münden zur Umgebung hin in Form einer Ausnehmung aus.

Die eingesetzten Fluor-Kunststoffmaterialien weisen eine besonders hohe chemische Beständigkeit auf, so dass eine Anwendung auch bei Vorhandensein chemisch aggressiver Medien möglich ist, ohne dass dabei die guten mechanischen Eigenschaften beeinträchtigt werden. In Abhängigkeit des jeweils einzusetzenden Fluor-Kunststoffmaterials läßt sich das Strukturbauteil kostengünstig herstellen, an verschiedenste Anwendungsmöglichkeiten, wie sie in der Praxis vorkommen, anpassen und darüber hinaus einfach montieren.

Im Hinblick auf eine leichte Verformbarkeit hat sich insbesondere Polytetrafluorethylen (PTFE) als Fluor-Kunststoffmaterial bewährt, das wegen seiner hohen Schmelzviskosität nicht plastisch formbar ist und der jeweils gewünschte Strukturbauteilkörper wird aus dem Grundmaterial und mithin aus pulverförmigem Rohstoff mit 200 bis 400 bar kalt gepreßt und bei 370° bis 380° drucklos gesintert. Sofern man Folienmaterial erhalten möchte, wird dieses regelmäßig von Massivblöcken, vorzugsweise mit zylindrischer Form, abgeschält. Polytetrafluorethylen kommt demgemäß regelmäßig in Form starrer Festkörper in den Handel, wie Plattenstäbe, Röhren etc.. Es ist für einen Durchschnittsfachmann auf dem Gebiet der Membrantechnik überraschend, dass er trotzdem zur Gänze oder teilweise aus Fluor-Kunststoffmaterialien, wie Polytetrafluorethylen, hergestellte dünnwandige Strukturbauteile erhalten kann, die eine derart hohe Beweglichkeit aufweisen, dass sie sogar die Funktion von bekannten flexiblen Kalotten- oder Rollmembranen aus Elastomerwerkstoffen übernehmen können.

Das genannte Polytetrafluorethylen-Material als Fluor-Kunststoffmaterial kann sowohl reines PTFE als auch modifiziertes PTFE umfassen und sowohl ungefülltes PTFE als auch PTFE-Compounds mit einschließen. Für ein modifiziertes PTFE-Material kommen Füllstoffe, wie Bronze, Kohlestaub, MoS₂ sowie Glasfaser- und Kohlefasermaterialien in Frage. Neben PTFE lassen sich als weitere Fluor-Kunststoffmaterialien Ethylentetrafluorethylen (ETFE), Ethylenchlortrifluorethylen-Copolymer (ECTFE), Polychlortrifluorethylen-Copolymer (PCTFE), Perfluoralkoxy-Copolymer (PFA), Polyvinylidenfluorid (PVDF) und Tetrafluorethylen-Perfluorpropylen (FEP) einsetzen.

Aufgrund des jeweils am Trennelement angeordneten Strukturteils lassen sich durch Veränderung der Schlingenform sich dessen Eigenschaften einstellen, beispielsweise die Resistenz gegen Biegewechselspannungen erhöhen, eine verringerte Gaspermeation erreichen, die Walk- und Abrolleigenschaften des nachgiebigen Trennelementes einstellen, insbesondere verbessern, die Stabilität erhöhen und dergleichen mehr. Vorzugsweise ist dabei vorgesehen, dass das jeweilige Strukturteil sich linienförmig längs des Trennelementes erstreckt, wobei das jeweilige Strukturteil vorzugsweise einstückiger Bestandteil des Trennelementes ist; dem Grunde nach aber unter Einsatz moderner Rapid-Prototyping-Verfahren auch nachträglich anbringbar, insbesondere aufsetzbar wäre.

Das Strukturbauteil ist vorzugsweise aus einer Einzellage gebildet; es besteht aber auch die Möglichkeit, insbesondere zur Verbesserung der Medien-Impermeabilität, das Strukturbauteil aus mehreren Einzellagen zusammen zu setzen. Bei einer dahingehenden Mehrlagenanordnung lassen sich im Sinne eines Schichtenverbundes die Lagen aus Fluor-Kunststoffmaterialien, beispielsweise über eine Klebstoffverbindung, aneinander legen oder in Abhängigkeit des jeweils eingesetzten Kunststoffmaterials ist hier auch ein Co-Extrusionsverfahren zur Mehrlagenbildung denkbar. Insbesondere ließe sich dergestalt eine Lage ausschließlich aus Fluor-Kunststoffmaterialien ausgebildet mit weiteren Beschichtungslagen zur Permeationsverringerung versehen, wobei man insoweit das sog. "Migrationsproblem" in den Griff bekommen könnte, das insbesondere im Bereich der Pharmaindustrie eine Rolle spielt, bei der man sicherstellen will, dass eine Kontaminierung verhindert ist, bei der ansonsten Fremdpartikel, gegebenenfalls auch aus dem Lagenverbund stammend, in das Innere einer Trennstruktur eindringen können. Sofern man die angesprochenen Lagen trennend auf Abstand hält, entsteht insoweit zwischen diesen ein Hohlraum, der mit geeigneten Medien befüllbar weitere Anwendungsmöglichkeiten für das Strukturbauteil eröffnet. Insbesondere könnten dergestalt wärmetauschende Medien in den Lagenverbund eingebracht werden, um dergestalt ein von dem Trennelement umfaßtes Medium zu beeinflussen, beispielsweise dieses zu erwärmen oder wahlweise abzukühlen.

Weitere vorteilhafte Ausgestaltungen der erfindungsgemäßen Lösung sind Gegenstand der sonstigen Unteransprüche.

Im folgenden wird das erfindungsgemäße Strukturbauteil anhand verschiedener Ausführungsformen nach der Zeichnung näher erläutert. Dabei zeigen die
- Fig. 1 bis 4: in perspektivischer Ansicht Strukturbauteile ohne und mit in das Trennelement eingebrachten Strukturteilen, wobei die Ausführungsformen gemäß Fig. 3 und 4 nicht dem Anspruch 1 unterfallen;
- Fig. 5 bis 11: verschiedene Ausführungsformen von im Querschnitt dargestellten Wandabschnitten des jeweiligen Trennelementes nach den Fig. 1 und 2 mit verschiedenen Arten an Strukturteilen und -linienverläufen, wobei die Ausführungsformen gemäß Fig. 5 bis 10 nicht dem Anspruch 1 unterfallen, und
- Fig. 12: die Anordnung des Strukturbauteils gemäß Darstellung nach der Fig. 11 als Trennelement bei einem Hyddrospeicher.

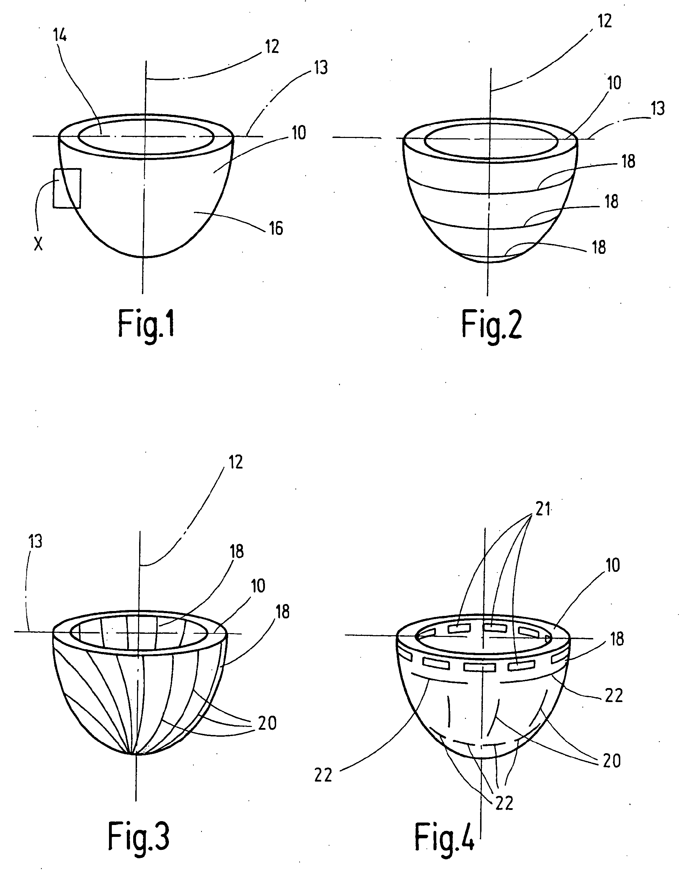

Die Fig. 1 zeigt ein Strukturbauteil in Form eines elastisch nachgiebigen Trennelementes 10 mit einer dreidimensional ausgebildeten, eine Lage aufweisenden Grundstruktur. Das Trennelement 10 hat eine Art Kalottenform und ist vorzugsweise als Halbkugel ausgebildet. Andere räumliche Gestaltungen sind hier für das Trennelement 10 denkbar. Insbesondere kann das Trennelement 10 als sphärischer Hohlkörper in der Längsachse, die eine erste Hauptrichtung 12 definiert, eine verlängerte oder verkürzte Ausrichtung gegenüber der oben liegenden, aufgespannten Querschnittsebene aufweisen, die eine weitere zweite Hauptrichtung 13 definiert, die senkrecht auf der ersten Hauptrichtung 12 steht. Bei einer verkürzten Ausdehnung in der genannten ersten Hauptrichtung 12 des Trennelementes 10 entsteht eine flach gewölbte Kalotten-Trenneinrichtung, die insbesondere bei beengten Einbauverhältnissen und bei Betriebssituationen mit geringem Arbeitsvermögen ohne weiteres einsetzbar ist. Die nachfolgenden Ausführungen betreffen also insoweit auch ein Strukturbauteil mit einer eine schwache Wölbung aufweisenden Trennelementstruktur (nicht dargestellt).

Das Strukturbauteil ist aus einem Fluor-Kunststoffmaterial aufweisenden Werkstoff, vorzugsweise einem zur Gänze aus Fluor-Kunststoffmaterial bestehenden Werkstoff gebildet. Vorzugsweise besteht das Trennelement 10 aus einem hydraulisch gepreßten und gesinterten Rohling aus Polytetrafluorethylen-Material (PTFE). Als Ausgangswerkstoff stehen an Polytetrafluorethylen-Materialien bevorzugt Halbzeuge in vielerlei Formen zur Verfügung, beispielsweise aus Blöcken geschälte Folien, Vollstäbe, Ronden und dergleichen mehr. Aufgrund der physikalischen Eigenschaften des PTFE-Materials lassen sich Fertigerzeugnisse mit gewünschter Formgestaltung durch spanende Bearbeitung aus den genannten Grund-Formkörpern herstellen, die, wie dargelegt, aus pulverförmigem Rohstoff gepreßt und gesintert werden. Insbesondere bei sehr dünnwandigen Erzeugnissen kommt auch eine Formgebung durch Blasformen einer PTFE-Dispersion vor dem Sintern in Betracht. Sofern die in Fig.1 gezeigte Halbkugelform aus einem dahingehenden Polytetrafluorethylen-Vollkörper erhalten ist, ist dieser dann durch spanende Bearbeitung des Rohkörpers in die jeweils gezeigte Grundstrukturform zu bringen. Um dabei den beim Zerspanungsprozeß entstehenden Polytetrafluorethylen-Abfall gering zu halten, ist vorzugsweise ein Vorformkörper als Rohling in einer Halbschalenform als Preßform herzustellen. Neben dem genannten Polytetrafluorethylen-Material lassen sich auch andere bereits eingangs erwähnte Fluor-Kunststoffmaterialien je nach Anwendungsfall einsetzen. Auch kann neben reinem PTFE auch modifiziertes PTFE eingesetzt werden sowie ungefülltes PTFE als auch PTFE - Compounds.

Das in der Fig.1 dargestellte Trennelement 10 ist als einlagiges Strukturbauteil grundsätzlich zur Trennung von unter Druck stehenden Medien, auch von aggressiven Medien, einsetzbar. Insbesondere ist an eine Medientrennung von Fluiden einschließlich Gasen, aber auch an die Trennung von pastösem und granulatförmigem Material gedacht. Ab einer bestimmten reduzierten Wandstärke des Trennelementes 10 ist das in Fig.1 gezeigte Strukturbauteil elastisch nachgiebig gestaltet in der Art einer Rollmembran oder einer sonstigen elastomeren Trennmembran, die sich vorzugsweise von der Bodenseite her in das Innere der topfartigen Trennelementstruktur einwölben und von dort aus in Abhängigkeit der anstehenden Druck- und Medienverhältnisse wieder flexibel in die gezeigte Ausgangslage zurückwölben kann. Insoweit ist die in der Fig.1 gezeigte Trennelementstruktur insbesondere für den Einsatz bei Medientrennungen im hydropneumatischen Druckspeicherbereich einsetzbar, aber auch als Pumpenantriebskörper, auch in Bereichen der Medizintechnik, verwendbar.

Das in der Fig.1 gezeigte Trennelement 10 kann mit einer gleichbleibenden Wandstärke ausgebildet sein; es besteht aber auch die Möglichkeit, entlang der Außenumfangslinie des Trennelementes 10 sich ändernde Wandstärken vorzusehen, beispielsweise in diametral einander gegenüberliegenden Richtungen zur Längsachse als erster Hauptrichtung 12 verstärkte bzw. reduzierte Wandabschnitte in das Trennelement 10 als Grundstruktur einzubringen, um dergestalt das beschriebene Ein- und Ausrollvermögen günstig zu beeinflussen. Als besonders günstig haben sich für die Dimensionierung der Wandstärke des Trennelementes 10 Werte ergeben im Bereich von ca. 0,5 bis 1,5 mm, aber auch in Bereichen von 0,2 bis 3 mm. Vorteilhafterweise werden bei der Bemessung der Wandstärke etwa 0,5 % bis 2 % des mittleren Durchmessers der möglichen Bewegungszone für das Trennelement 10 angesetzt. Somit ist vorzugsweise das Trennelement 10 als gleichförmiger Rotationskörper, wie dargestellt, ausgebildet.

Die in Fig.1 dargestellte einlagige Trennelementstruktur läßt sich sowohl von der Innenseite 14 als auch von der Außenseite 16 her beschichten, beispielsweise um dergestalt zur Vermeidung des Wanderns von Verschmutzungen (Migrationsproblem) beizutragen, was eine Rolle spielen kann, sofern das dünnwandige Fluor-Kunststoffmaterial für das Trennelement 10 folienartig von der Wandstärke her weiter reduziert wird. Als besonders geeignet haben sich hier Beschichtungen erwiesen in der Form von Ethylenvinylalkoholcopolymer oder Ethylenvinylacetatcopolymer. In Sonderanwendungsfällen ist auch denkbar, dass das Trennelement 10 nicht in der Art eines halbkugelförmigen Rotationskörpers ausgebildet ist, sondern eine konische Form hat, beispielsweise eine Kegelstruktur einnimmt; es sind aber auch zylindrische, quaderförmige sowie polyederförmige, beispielsweise oktaederförmige Grundstrukturausbildungen (nicht dargestellt) realisierbar. Im folgenden wird jedoch die Grundstruktur des Trennelementes 10 anhand der Halbkugelform weiter erläutert, wobei sich die folgenden Ausführungen dann insoweit auch auf geänderte geometrische Strukturen des Trennelementes 10 im vorstehend genannten Sinne anwenden lassen.

Die genannten weiteren Schichten lassen sich auf das Trennelement 10 unter Einsatz von Laminierverfahren aufbringen; es besteht aber auch die Möglichkeit, in Einzelfällen zum Herstellen des Mehrschichtenverbundes Co-Extrusionsverfahren einzusetzen, und zwar in Abhängigkeit der jeweils gewählten Geometrie für die Grundstruktur des Trennelementes 10. Insoweit besteht auch die Möglichkeit, aus mehreren Schichten, beginnend mit zwei Grundschichten oder-lagen, aus gleichen oder verschiedenen Fluor-Kunststoffmaterialien eine mehrlagige Trennelementstruktur (nicht dargestellt) zu erhalten. Die dahingehenden Lagen können dann unmittelbar aneinander anliegen; aber auch getrennt sein, was im folgenden noch näher erläutert werden wird.

Bei der Ausführungsform nach der Fig.2 weist die dort gezeigte Lage des dreidimensionalen Trennelementes 10 in eine Richtung vorstehende, linienförmige Strukturteile 18 auf. Bei der Ausführungsform nach der Fig.2 verlaufen die jeweiligen linienförmigen Strukturteile 18 in Form konzentrisch angeordneter Strukturkreise. Die dahingehenden Strukturkreise können sich, wie dargestellt, um den gesamten Außen- und/oder Innenumfang des Trennelementes 10 erstrecken; es besteht aber auch hier die Möglichkeit, dass die jeweilige Linienführung in sich unterbrochen ist. Die als Strukturkreise ausgebildeten Strukturteile 18 können zueinander gleiche oder voneinander verschiedene Abstände aufweisen. Der einfacheren Darstellung wegen sind die linienförmigen Strukturteile 18 oder Strukturkreise nur prinzipiell in der Fig. 2 wiedergegeben und sind bei der tatsächlichen Realisierung des Strukturbauteils gleichfalls dreidimensionale Strukturkörper, die vorzugsweise einstückig mit dem Trennelement 10 verbunden sind. Die genannten linienförmigen Strukturteile 18 können dergestalt aus Erhebungen und/oder Vertiefungen, gebildet aus der jeweiligen Wand des Trennelementes 10, bestehen.

Was im Folgenden noch näher gezeigt werden wird, weisen im Querschnitt gesehen die linienförmigen Strukturteile einen schlingenförmigen Querschnitt auf in der Art von offenen oder geschlossenen Hohlschlingen, Falten, nutförmigen Einstichen und dergleichen mehr. Ferner sind die jeweils linienförmig ausgebildeten Strukturteile 18 in den beiden genannten Hauptrichtungen 12, 14 des Strukturbauteils gegeneinander versetzt angeordnet. Anstelle der in Fig. 2 gezeigten horizontalen Anordnung für die Strukturbauteile 18 können die aufgezeigten Strukturkreise auch schräg zur ersten Hauptrichtung 12 (nicht dargestellt) verlaufend angeordnet sein.

Bei einer geänderten nicht dem Anspruch 1 unterfallenden Ausführungsform nach der Fig. 3 weist das Trennelement 10 von seinem Bodenteil ausgehend als Strukturteile 18 Spiralarme 20 auf, die von ihrem mehrdimensionalen Aufbau her entsprechend den vorstehend beschriebenen Strukturteilen 18 angepasst sind. Insbesondere bei einem spiralförmigen Aufbau ist es vorteilhaft, das Trennelement 10 mit verkürzter Ausrichtung in der Längsachse als Teilkalotte auszubilden. Dergestalt ergibt sich dann ein besonders steifer Rollmembranaufbau.

Bei der nicht dem Anspruch 1 unterfallenden Ausführungsform nach der Fig. 4 sind die Strukturteile 18 an der Oberseite des Trennelementes 10 aus horizontal verlaufenden Teilprägungen 21 gebildet sowie darunterliegend aus vergleichbar verlaufenden Teillinien 22. In Blickrichtung auf die Fig. 4 gesehen, sind dann darunterliegend bei dem Trennelement 10 die nach der Fig. 3 aufgezeigten Spiralarme 20 als Teilsegmentlinien realisiert und darunterliegend in Richtung der Bodenseite der Trennelementgrundstruktur finden sich wiederum horizontal verlaufende Teilsegmentlinien 22, nunmehr in verkürzter Länge gegenüber den darüberliegenden Segmentlinien 22. Die Art an möglichen, in das Trennelement 10 einzubringenden Strukturteilen 18 ist sehr weitreichend und richtet sich vorrangig nach dem gewünschten Anwendungszweck für das jeweilige Strukturbauteil.

Für ein exaktes Ein- und Ausrollen einer Rollmembran erweist sich eine Struktur nach der Fig. 2 als besonders geeignet. Für kurze Hübe bei hohen Rückstellkräften erweist sich eine Teilkalottenform mit Spiralausgestaltung nach der Fig. 3 als besonders günstig. Die genannten Strukturteile 18 sind vorzugsweise einstückiger Bestandteil des Trennelementes 10 mit ihren Wandteilen; es besteht dem Grunde nach aber auch die Möglichkeit, hier je nach Anwendungszweck Strukturteile separat auf dem Trennelement 10 nach dessen Herstellung aufzusetzen (nicht dargestellt).

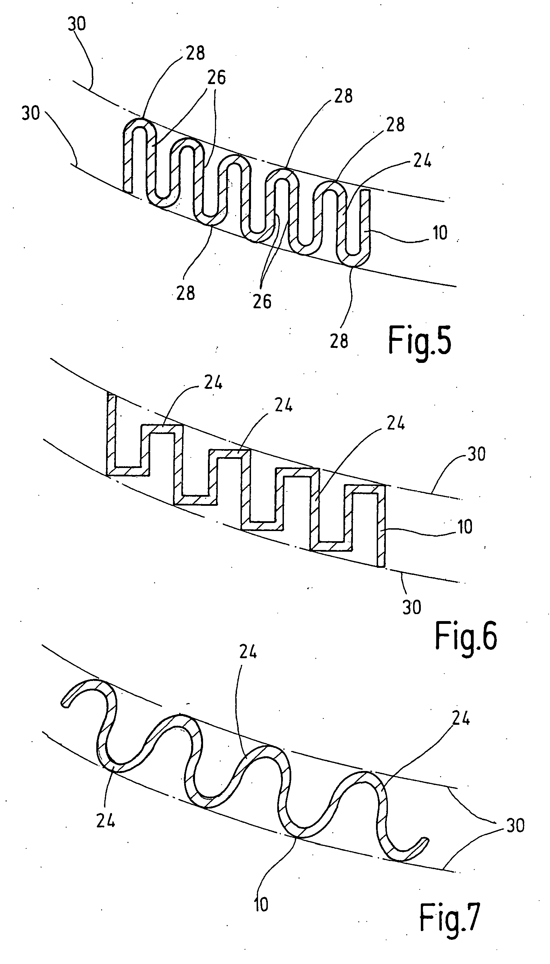

Die nachfolgenden Figuren 5 bis 11 entsprechen verschiedenen Querschnittsformen an Ausgestaltungen des Trennelementes 10, wobei die Querschnittsformen gemäß den Figuren 5 bis 10 nicht dem Anspruch 1 unterfallen. Die verschiedenen Querschnittsformen ergeben sich, wenn man dem Bildausschnitt X in Fig. 1 in Vergrößerung im Querschnitt betrachtet, wobei jede Wandquerschnittsform nach den Fig. 5ff eine eigenständige Art eines Trennelementes 10 darstellt, wobei der einfacheren Darstellung wegen in Fig. 1 das dortige Trennelement 10 nur als Glattstruktur wiedergeben ist. So ist die Ausgangs-Grundstruktur nach der Fig. 1 mit einem Wandverlauf im Ausschnitt X versehbar gemäß der Darstellung nach der Fig. 5. Der in Fig. 5 gezeigte Wandabschnitt 24 weist einen bogenförmigen Verlauf auf, bei dem die Bogenabschnitte 26 zwischen den Umlenkstellen 28 in vertikaler Parallelanordnung zu der Längsachse als erster Hauptrichtung 12 des Trennelementes 10 verlaufen. Des weiteren liegen die freien Enden der Umlenkstellen 28 auf zuordenbaren fiktiven Begrenzungslinien 30, die parallel zueinander verlaufend den gleichen Abstand zueinander beibehalten und insoweit auch fiktive Begrenzungsflächen für die Wand des Trennelementes 10 bilden.

Die Ausführungsform nach der Fig.6 entspricht dem Grunde nach der Ausführungsform eines Wandabschnittes nach der Fig.5, wobei in Fig.6 der bogenförmige Verlauf durch horizontal und vertikal ineinander übergehende Wandabschnitte 24 gebildet ist, wobei auch insoweit die jeweiligen Umlenkstellen an den beiden parallel zueinander verlaufenden fiktiven Begrenzungslinien 30 enden. Die Fig.7 zeigt zwischen den genannten Begrenzungslinien 30 eine bogenförmige Ausführungsform mit sinusförmigem Verlaufcharakter, wobei alle Ausgestaltungen nach den Fig. 5 bis 7 bezogen auf ihre Wandabschnitte 24 gleiche Wandstärken für eine jede Ausführungsform aufweisen.

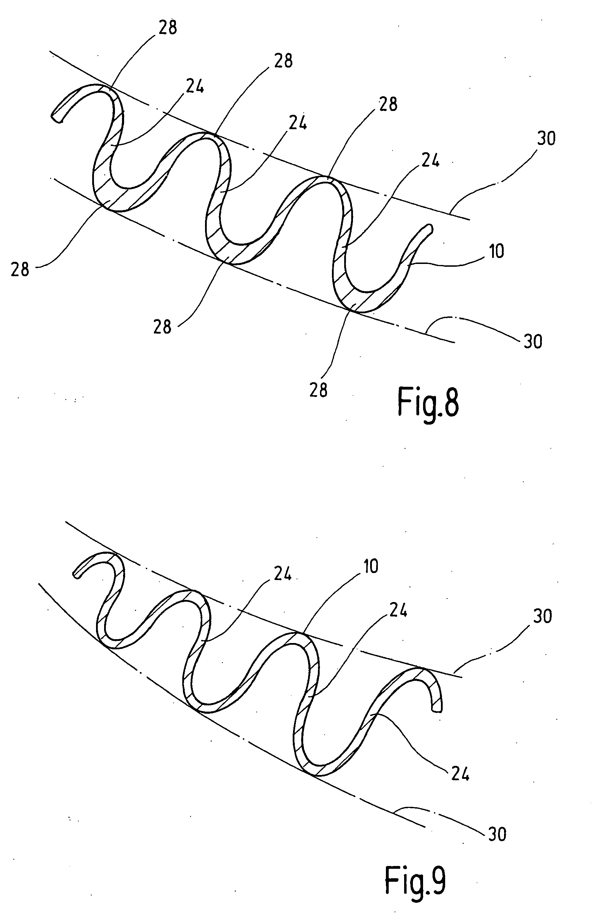

Insoweit unterscheidet sich die Lösung nach der Fig.8 von den vorangegangenen Ausführungsbeispielen gleicher Wandstärke, wobei bei der Lösung nach der Fig.8 in Blickrichtung auf die Figur gesehen im oberen Bereich der jeweiligen Umlenkstelle 28 diese in der Wandstärke reduziert ist und die darunterliegenden Umlenkstellen 28 sind wiederum vom Querschnitt der Wandstärke her dicker gewählt. Die Wandabschnitte 24 zwischen einer jeden Art an Umlenkstellen 28 reduzieren oder verbreitern dann dergestalt kontinuierlich ihre Wandstärke. Der einfacheren Darstellung wegen wurde in der Fig.8 der ansonsten gekrümmt verlaufende Wandabschnitt in einer horizontalen Ebene wiedergegeben.

Die Ausführungsform nach der Fig.9 entspricht wiederum einem tatsächlichen Wandabschnittsverlauf nach dem Ausschnitt X in Fig.1, wobei im dahingehenden Fall die fiktiven Begrenzungslinien 30 sich in Richtung der Oberseite der Grundstruktur 10 konisch verjüngen. Insoweit ist der Abstand zwischen den fiktiven Begrenzungslinien 30 im oberen Randbereich des Trennelementes 10 verjüngt und verbreitert sich in Richtung zu der Bodenseite des Trennelementes 10, wobei das Strukturteil in der Art einer Sinuswelle ausgebildet dem dahingehenden Verlauf der Begrenzungslinien 30, wie in Fig.9 dargestellt, nachfolgt. Bei der dahingehenden Gestaltung ist insbesondere mit einem gleichmäßigeren Abrollverhalten ohne Einknicken für die derart aufgebaute Trennmembran zu rechnen, was auch für den Fall gilt, dass bei einer glatt gestalteten Ausführungsform nach der Fig.1 die Grundstruktur 10 im Bodenbereich stärker ausgebildet ist als im oberen freien Randbereich des Strukturbauteils.

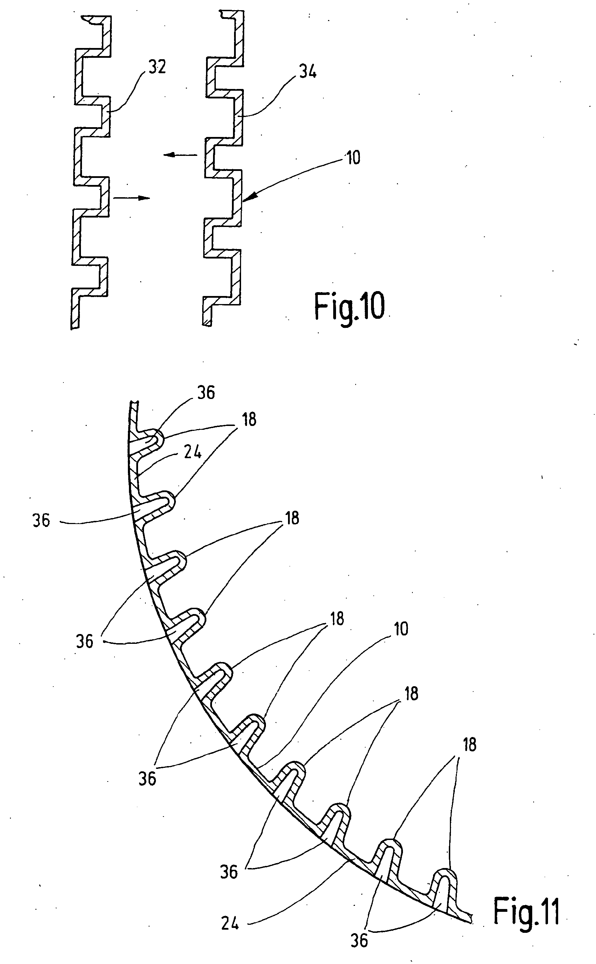

Bei der Ausführungsform nach der Fig.10 ist ein Zweilagenaufbau mit zwei Eingriffsmäandern 32 und 34 realisiert. Die dahingehenden Mäanderlagen können in der Art eines Eingriffs- oder Reißverschlußsystems in verbindende Anlage miteinander gebracht werden; es besteht aber auch die Möglichkeit, gemäß der Darstellung nach der Fig.10 die Lagen 32,34 auf Abstand zueinander zu halten, um dergestalt einen Medienfüllraum zu schaffen, beispielsweise für das Einbringen von Dichtmedien aber auch von Heiz- und/oder Kühlmedien. Insoweit läßt sich dann das Trennelement 10 mit ihrem Innenraum über das gekammerte Volumen zwischen zwei Lagen 32,34 sinnfällig beeinflussen.

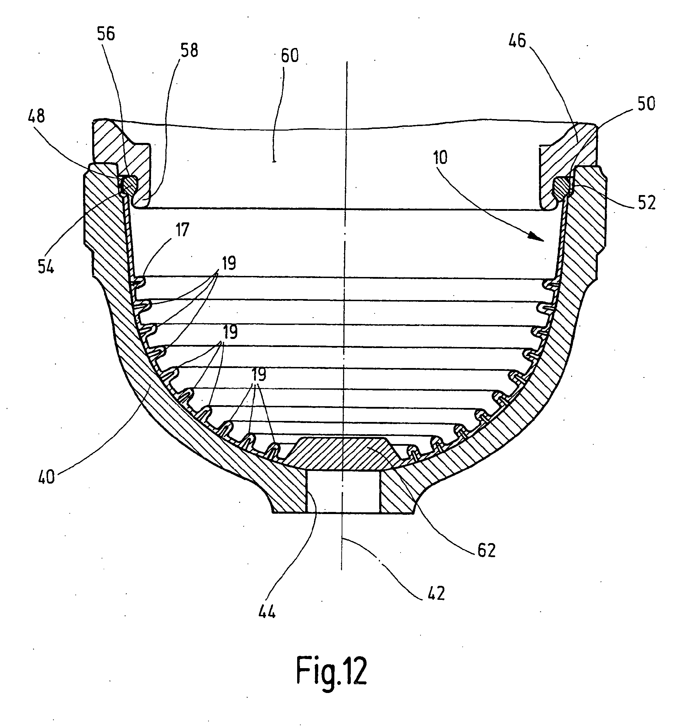

Bei der Ausführungsform nach der Fig.11 ist eine Trenn- oder Rollmembran realisiert, wie sie dergestalt auch Gegenstand der Fig.2 ist. Die linienförmigen Strukturteile 18 nach der Ausführungsform der Fig.11 sind aus nach innen vorstehenden Falten als Schlingenform gebildet, die nach außen zur Umgebung hin Hohlräume in Form von Ausnehmungen 36 begrenzen und deren Wandstärke im oberen Bereich des Trennelementes 10 der Wandstärke der Wandabschnitte 24 entspricht, wohingegen im Bodenbereich des Trennelementes 10 die Wandabschnitte 24 stärker ausgebildet sind und somit auch die Wandstärke der Falten im unteren Bereich des Trennelementes 10. Insoweit verlaufen die Wandabschnitte 24 zwischen den einzelnen Schlingen oder Falten eben und geradlinig, weisen jedoch in Richtung des Bodenbereiches eine zunehmend größere Wandstärke auf. Auch stehen die einzelnen Falten als Strukturteile 18 nicht senkrecht auf den zuordenbaren Wandabschnitten 24 auf, sondern weisen in Richtung der Oberseite des Tennelementes 10 eine vorgebbare Neigung auf, woraus sich eine optimale Rollcharakteristik ergibt bei hoher Biegewechselfestigkeit, die insoweit einen lang andauernden funktionssicheren Betrieb sicherstellt. Die in Fig.11 gezeigte Rollmembrananordnung kommt insoweit bevorzugt bei Hydrospeicheranwendungen zum Einsatz gemäß der Schnittdarstellung der nachfolgenden Fig. 12.

Von einem Ausführungsbeispiel des dahingehenden Druckbehälters in Form eines Hydrospeichers sind in der Fig. 12 lediglich ein Gehäuseunterteil 40 mit einem zu einer Gehäuselängsachse 42 als der einen Hauptrichtung 12 konzentrischen, bodenseitigen Fluidanschluß 44 sowie ein an das Gehäuseunterteil 40 angrenzendes Teilstück des Gehäuseoberteils 46 dargestellt. An der Verbindungsstelle zwischen Gehäuseunterteil 40 und Gehäuseoberteil 46 ist der offene, ringförmige Rand 48 eines Trennelementes 10 in Form einer Rollmembran gemäß der Darstellung nach der Fig.11 festgelegt, insbesondere festgespannt. Dabei stützt sich eine Randverdickung 50 der Rollmembran einerseits an einer Ringfläche 52 des Gehäuseunterteils 40 ab und liegt andererseits an einem O-Ring 54 an, der wiederum in einer Ringnut 56 an einem axial vorstehenden Ringkörper 58 des Gehäuseoberteils 46 sitzt. Die Fig.12 zeigt die Rollmembran als Trennelement 10 in einem voll ausgerollten oder ausgezogenen Zustand, bei dem der in der Fig.12 oberhalb der Membran gelegene Raum 60, also die Gasseite des Hydrospeichers, das größte Volumen besitzt und am Fluidanschluß 44 kein Fluiddruck herrscht, so dass sich die Rollmembran an die Innenwand des Gehäuseunterteils 40 anlegt, wobei ein zentraler Verstärkungswulst 62 des Trennelementes 10 den Rand des Fluidanschlusses 44 übergreift und so eine mechanische Sicherung gegen ein Eindrücken der Rollmembran in den Fluidanschluß 44 bei fehlendem Fluiddruck bildet.

Mit dahingehenden Hydrospeichern gemäß der Darstellung nach der Fig.12 lassen sich verschiedenste hydraulische Aufgabenstellungen lösen, wie beispielsweise das Dämpfen oder Glätten von Druckstößen in hydraulischen Anschlußleitungen, an die der Speicher über den Fluidanschluß 44 angeschlossen ist, oder durch Komprimierung des Arbeitsgases auf der Gasraumseite des Speichers läßt sich ein Fluidmedium unter vorgebbarem Druck abrufbar speichern. Eine weitere Vielzahl an Anwendungsmöglichkeiten sind hier denkbar.

## Patentansprüche

1. Strukturbauteil in Form eines sich in zwei verschiedenen Hauptrichtungen (12, 13) erstreckenden, mindestens einlagigen und elastisch nachgiebigen Trennelementes (10), das mindestens zwei linienförmige Strukturteile (18) aufweist, die in den beiden Hauptrichtungen (12, 13) gegeneinander versetzt angeordnet sind, wobei zumindest ein Teil der linienförmigen Strukturteile (18) einen schlingenförmigen Querschnitt aufweist, und wobei das Trennelement (10) zumindest teilweise aus einem Fluor-Kunststoffmaterial aufweisenden Werkstoff, vorzugsweise einem zur Gänze aus Fluor-Kunststoffmaterial bestehenden Werkstoff, gebildet ist,
**dadurch gekennzeichnet,** dassdasTrennelement(10)in der Art einer Kalotte, vorzugsweise in der Art einer Halbkugel, ausgebildet ist, dass die linienförmigen Strukturteile (18) jeweils in Form konzentrisch angeordneter Strukturkreise verlaufen, dass die linienförmigen Strukturteile (18) nach innen vorstehende Falten in Schlingenform und nach außen zur Umgebung hin offene Hohlräume in Form von Ausnehmungen (36) begrenzen.

2. Strukturbauteil nach Anspruch 1, **dadurch gekennzeichnet, dass** zumindest ein Teil der jeweiligen Strukturteile (18) unter Bildung der Schlingenform mäanderförmig verlaufende Wandabschnitte (24) aufweist.

3. Strukturbauteil nach einem der Ansprüche 1 oder 2, **dadurch gekennzeichnet, dass** das jeweilige Strukturteil (18) von einem benachbart angeordneten Strukturteil (18) des Trennelementes (10) über gleichförmig verlaufende Wandabschnitte (24) getrennt ist.

4. Strukturbauteil nach einem der Ansprüche 1 bis 3, **dadurch gekennzeichnet, dass** das elastisch nachgiebige Trennelement (10) eine gewölbte Membranfläche aufweist mit zwei aufeinander senkrecht stehenden Hauptrichtungen (12, 13) als axiale und radiale Hauptrichtung.

5. Strukturbauteil nach einem der Ansprüche 1 bis 4, **dadurch gekennzeichnet, dass** das elastisch nachgiebige Trennelement (10) derart ausgebildet ist, dass bei einer Beaufschlagung mit einer Druckdifferenz, die zwischen den einander gegenüberliegenden Seiten des Trennelementes (10) an diesem wirkt, dieses sich in Richtung des jeweils geringer anstehenden Druckes auf der jeweiligen Seite reversibel einwölbt.

6. Strukturbauteil nach einem der Ansprüche 4 oder 5, **dadurch gekennzeichnet, dass** die gewölbte Membranfläche des Trennelementes (10) rotationssymmetrisch ausgebildet ist.

## Claims

1. Structural component in the form of a spacer element (10) extending in two different main directions (12, 13), said spacer element having at least one layer, being elastically resilient and having at least two linear structural members (18) arranged offset relative to one another in the two main directions (12, 13), wherein at least some of the linear structural members (18) have a loop-like cross section and wherein the spacer element (10) is formed at least partially from a material containing fluorocarbon plastic, preferably a material consisting wholly of fluorocarbon plastic,
**characterized in that** the spacer element (10) is designed as a type of cap, preferably as a type of hemisphere, that the linear structural members (18) each extend in the form of structural circles arranged concentrically, that the linear structural members (18) delimit inwardly protruding folds of a looped shape and cavities in the form of recesses (36) opening outwardly towards the surroundings.

2. Structural component as defined in claim 1, **characterized in that** at least some of the respective structural members (18) have meandering wall sections (24) forming the looped shape.

3. Structural component as defined in either one of claims 1 or 2, **characterized in that** each structural member (18) is separated from a structural member (18) of the spacer element (10) arranged adjacent thereto via wall sections (24) extending uniformly.

4. Structural component as defined in any one of claims 1 to 3, **characterized in that** the elastically resilient spacer element (10) has a curved membrane surface with two main directions (12, 13) at right angles to one another as axial and radial main directions.

5. Structural component as defined in any one of claims 1 to 4, **characterized in that** the elastically resilient spacer element (10) is designed in such a manner that when it is acted upon with a difference in pressure acting on it between the sides of the spacer element (10) located opposite one another, it arches in reversibly in the direction of the respectively lower pressure.

6. Structural component as defined in one of claims 4 or 5, **characterized in that** the curved membrane surface of the spacer element (10) is designed to be rotationally symmetric.

## Revendications

1. Composant structurel sous la forme d'un élément de séparation (10) s'étendant dans deux directions principales (12, 13) différentes, constitué d'au moins une couche et flexible élastiquement, et présentant au moins deux parties structurelles linéaires (18) décalées l'une par rapport à l'autre dans les deux directions principales (12, 13), où au moins une partie des parties structurelles linéaires (18) présente une section transversale en forme de boucles, et où l'élément de séparation (10) est constitué au moins partiellement d'un matériau comprenant une matière plastique fluorée, préférentiellement d'un matériau intégralement en matière plastique fluorée,
**caractérisé en ce que** l'élément de séparation (10) est réalisé à la manière d'une calotte, préférentiellement à la manière d'un hémisphère, **en ce que** les parties structurelles linéaires (18) s'étendent chacune sous forme de cercle structurel concentrique, **en ce que** les parties structurelles linéaires (18) délimitent des plis saillants vers l'intérieur sous forme de boucles et des cavités ouvertes sur l'environnement extérieur, ayant la forme d'évidements (36).

2. Composant structurel selon la revendication 1, **caractérisé en ce qu'**au moins une partie des parties structurelles (18) présente des segments de paroi (24) s'étendant en méandre en réalisant la forme en boucles.

3. Composant structurel la revendication 1 ou 2, **caractérisé en ce que** chaque partie structurelle (18) est séparée d'une partie structurelle (18) voisine de l'élément de séparation (10) par des segments de paroi (24) s'étendant avec une forme identique.

4. Composant structurel selon l'une des revendications 1 à 3, **caractérisé en ce que** l'élément de séparation flexible élastiquement (10) présente une surface de membrane arquée avec deux directions principales (12, 13) perpendiculaires l'une à l'autre en tant que directions principales axiale et radiale.

5. Composant structurel selon l'une des revendications 1 à 4, **caractérisé en ce que** l'élément de séparation flexible élastiquement (10) est réalisé de telle manière qu'en cas de sollicitation par un différentiel de pression agissant sur celui-ci entre les faces de l'élément de séparation (10) opposées l'une à l'autre, ledit élément de séparation s'arque de manière réversible dans la direction de la pression inférieure appliquée sur la face correspondante.

6. Composant structurel selon la revendication 4 ou 5, **caractérisé en ce que** la surface de membrane arquée de l'élément de séparation (10) est réalisé de manière symétrique de révolution.
